# EUROPEAN PATENT APPLICATION

(11) **EP 4 819 108 A1**
(43) Date of publication of application: **07.10.2026**
(21) Application number: 24921888.4
(22) Date of filing: 19.12.2024
(51) Int. Cl.: G08G 5/54, B64C 13/20, B64C 27/04, B64U 10/13, B64U 10/17, B64U 70/95, G01C 21/16, G05D 1/46, G05D 1/48, G05D 1/248, G05D 1/611, G05D 1/661

(54) **AUTOMATIC LANDING SYSTEM FOR VERTICAL TAKE-OFF AND LANDING CRAFT, VERTICAL TAKE-OFF AND LANDING CRAFT, AND LANDING CONTROL METHOD FOR VERTICAL TAKE-OFF AND LANDING CRAFT**

(30) Priority: 01.02.2024 JP 2024014109
(71) Applicant: Mitsubishi Heavy Industries, Ltd., Chiyoda-ku Tokyo 100-8332 (JP)
(72) Inventor: KOJIMA, Toru, Tokyo 100-8332 (JP); MORI, Satoshi, Tokyo 100-8332 (JP)
(74) Representative: Hoffmann Eitle
(86) International application number: PCT/JP2024/044921
(87) International publication number: WO 2025/164135

(57) **Abstract**

In an automatic landing system for a vertical take-off and landing aircraft, a vertical take-off and landing aircraft, and a landing control method for a vertical take-off and landing aircraft, a relative position acquisition unit that acquires, with a position of an artificial satellite as a reference point, a relative position between a vertical take-off and landing aircraft and a landing target point by comparing carrier phase data transmitted from the artificial satellite to the vertical take-off and landing aircraft and carrier phase data transmitted from the artificial satellite to the landing target point, and a control unit that controls the vertical take-off and landing aircraft such that the relative position is zero are provided.

## Description

### Technical Field

The present disclosure relates to an automatic landing system for a vertical take-off and landing aircraft, a vertical take-off and landing aircraft, and a landing control method for a vertical take-off and landing aircraft.

### Background Art

In the related art, a technique for guiding a vertical take-off and landing aircraft to a target point is known. As such a technique, for example, there is one disclosed in PTL 1. An automatic landing system for a vertical take-off and landing aircraft of PTL 1 controls the vertical take-off and landing aircraft such that a relative position between the vertical take-off and landing aircraft and a landing target point is zero.

### Citation List

### Patent Literature

[PTL 1] Japanese Unexamined Patent Application Publication No. 2021-062719

### Summary of Invention

### Technical Problem

In the automatic landing system for a vertical take-off and landing aircraft in the related art, when the vertical take-off and landing aircraft is at a position away from the landing target point, a relative position is calculated based on position coordinates of the vertical take-off and landing aircraft acquired by GPS and position coordinates of the landing target point. On the other hand, when the vertical take-off and landing aircraft is at a position above the landing target point, the relative position is calculated based on a captured image of the landing target point captured by a camera. Therefore, there is a problem in that a plurality of pieces of processing for calculating the relative position between the vertical take-off and landing aircraft and the landing target point are required, and the system is complicated.

The present disclosure is made to solve the above-described problems, and an object of the present disclosure is to provide an automatic landing system for a vertical take-off and landing aircraft, a vertical take-off and landing aircraft, and a landing control method for a vertical take-off and landing aircraft, in which a system is simplified.

### Solution to Problem

In order to achieve the above-described object, an automatic landing system for a vertical take-off and landing aircraft according to the present disclosure includes a relative position acquisition unit that acquires, with a position of an artificial satellite as a reference point, a relative position between a vertical take-off and landing aircraft and a landing target point by comparing carrier phase data transmitted from the artificial satellite to the vertical take-off and landing aircraft and carrier phase data transmitted from the artificial satellite to the landing target point; and a control unit that controls the vertical take-off and landing aircraft such that the relative position is zero.

In addition, a vertical take-off and landing aircraft according to the present disclosure includes the automatic landing system for a vertical take-off and landing aircraft.

In addition, a landing control method for a vertical take-off and landing aircraft according to the present disclosure includes a step of acquiring, with a position of an artificial satellite as a reference point, a relative position between a vertical take-off and landing aircraft and a landing target point by comparing carrier phase data transmitted from the artificial satellite to the vertical take-off and landing aircraft and carrier phase data transmitted from the artificial satellite to the landing target point; and a step of controlling the vertical take-off and landing aircraft such that the relative position is zero. Advantageous Effects of Invention

According to the automatic landing system for a vertical take-off and landing aircraft, the vertical take-off and landing aircraft, and the landing control method for a vertical take-off and landing aircraft of the present disclosure, it is possible to simplify the system.

### Brief Description of Drawings

FIG. 1 is a schematic configuration diagram showing an example of an automatic landing system for a vertical take-off and landing aircraft according to a first embodiment.
FIG. 2 is an explanatory view showing a state in which a vertical take-off and landing aircraft according to the first embodiment is heading toward a landing target point.
FIG. 3 is an explanatory view showing a state in which the vertical take-off and landing aircraft according to the first embodiment has landed on the landing target point.
FIG. 4 is an explanatory view for describing processing of a guidance calculation unit.
FIG. 5 is a flowchart showing an example of a processing procedure of a landing control method for a vertical take-off and landing aircraft according to the first embodiment.
FIG. 6 is an explanatory view showing a landing operation of the vertical take-off and landing aircraft.
FIG. 7 is a flowchart showing an example of a processing procedure in an approach mode.
FIG. 8 is a flowchart showing an example of a processing procedure in a high-altitude hovering mode.
FIG. 9 is a flowchart showing an example of a processing procedure in a low-altitude hovering mode.
FIG. 10 is a flowchart showing an example of a processing procedure in a landing mode.
FIG. 11 is a flowchart showing an example of relative position calculation processing.
FIG. 12 is a schematic configuration diagram showing an example of an automatic landing system for a vertical take-off and landing aircraft according to a second embodiment.
FIG. 13 is an explanatory view showing a state in which the vertical take-off and landing aircraft according to the second embodiment is heading toward a landing target point.
FIG. 14 is an explanatory view showing an example of a marker provided at the landing target point.

### Description of Embodiments

Hereinafter, a preferred embodiment of the present disclosure will be described in detail with reference to the drawings. It should be noted that the present disclosure is not limited to the embodiment. When there are a plurality of embodiments, the present disclosure also includes configurations obtained by combining each embodiment. In addition, constituents in the embodiment include constituents that are easily conceivable by those skilled in the art, constituents that are substantially the same, and constituents within a so-called range of equivalents.

### [First Embodiment]

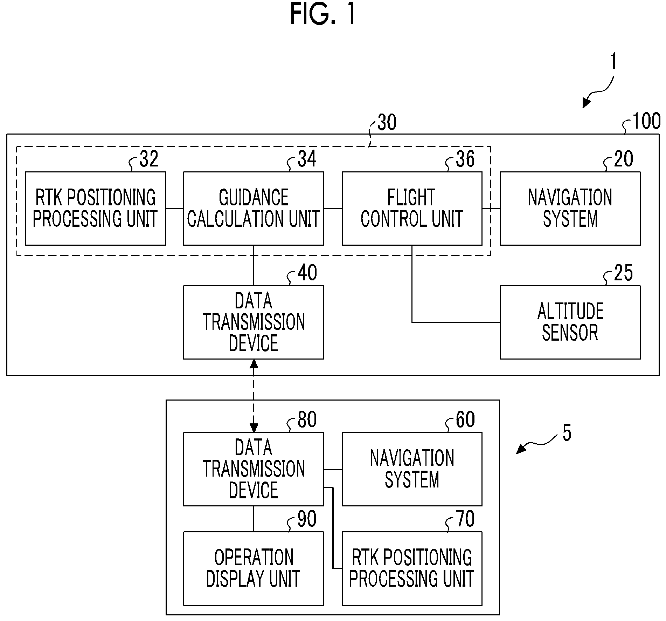

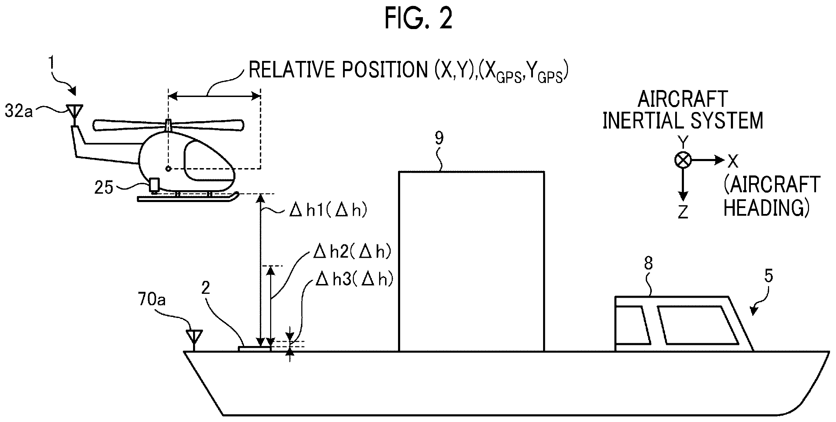

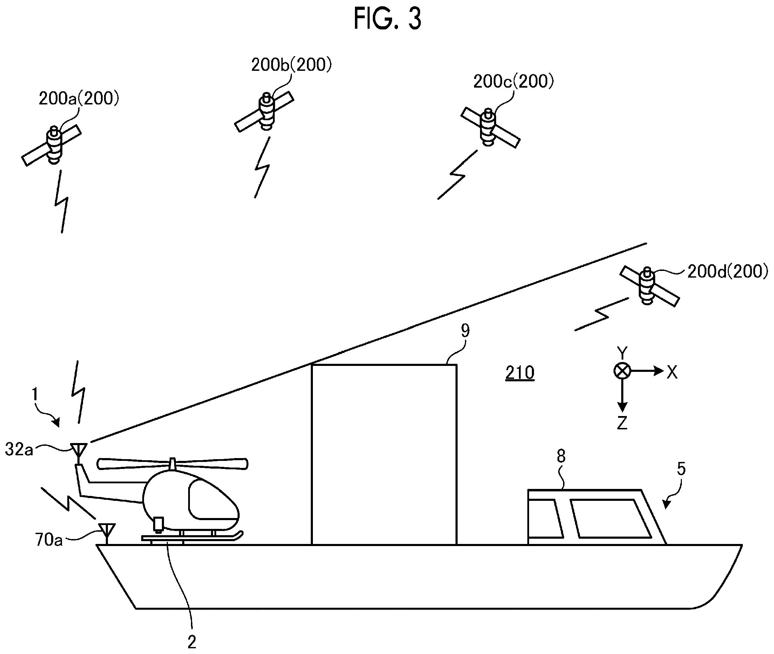

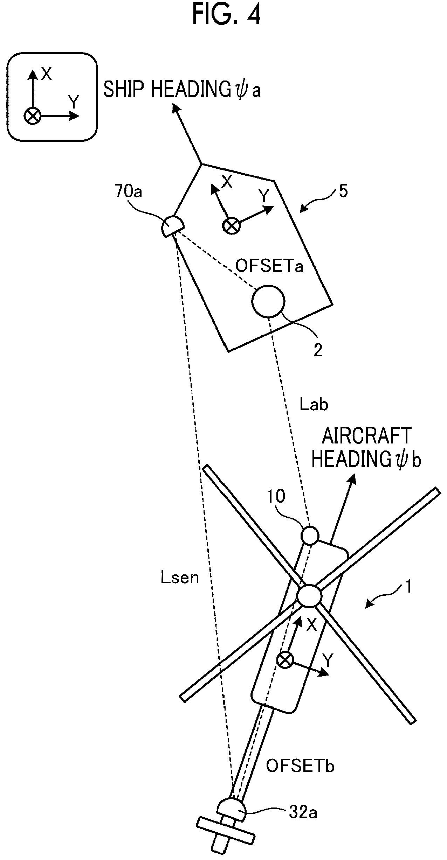

FIG. 1 is a schematic configuration diagram showing an example of an automatic landing system for a vertical take-off and landing aircraft according to the present embodiment, FIG. 2 is an explanatory view showing a state in which a vertical take-off and landing aircraft according to the present embodiment is heading toward a landing target point, FIG. 3 is an explanatory view showing a state in which the vertical take-off and landing aircraft according to the first embodiment has landed on the landing target point, and FIG. 4 is an explanatory view for describing processing of a guidance calculation unit.

As shown in FIG. 1, a vertical take-off and landing aircraft 1 according to the first embodiment is a flying object (for example, a helicopter, a drone, or the like) as a rotary-wing aircraft. In the present embodiment, the vertical take-off and landing aircraft 1 is an unmanned aircraft. The vertical take-off and landing aircraft 1 may be any flying object capable of moving forward, backward, turning, and hovering, and may be a manned aircraft. In addition, in a case where the vertical take-off and landing aircraft 1 is an unmanned aircraft, when the remote manual piloting is executed during the flight control of the unmanned aircraft by the autopilot, flight control based on the remote manual piloting is prioritized. Similarly, in a case where the vertical take-off and landing aircraft 1 is a manned aircraft, when manual piloting is executed during flight control of the manned aircraft by the autopilot, flight control based on the manual piloting is prioritized. The vertical take-off and landing aircraft 1 is equipped with an automatic landing system 100, and the flight is controlled by the automatic landing system 100 to land at a landing target point 2 shown in FIG. 2.

### (Landing Target Point)

In the present embodiment, as shown in FIG. 2, the landing target point 2 is provided on the ship 5. Therefore, the vertical take-off and landing aircraft 1 lands on the ship 5, which is a moving object moving on the water. However, the landing target point 2 is not limited to the ship 5, and may be provided in a vehicle or the like as a moving object moving on the ground, or may be provided in a stationary facility or on the ground. Although not shown, the ship 5 is provided with a restraining device for restraining the vertical take-off and landing aircraft 1 when the vertical take-off and landing aircraft 1 is landed on the landing target point 2 on the ship.

### (Ship)

As shown in FIG. 1, the ship 5 includes a navigation system 60, an RTK positioning processing unit (landing target point relative position measurement unit) 70, a data transmission device 80, and an operation display unit 90. In addition, the ship 5 includes a wheelhouse 8 and a structure 9 such as a hangar.

The navigation system 60 is, for example, an inertial navigation system (INS) (registered trademark), and acquires attitude angles of the ship 5 in a pitch direction and a roll direction, a ship heading, a speed, an acceleration, position coordinates in an earth coordinate system, and the like. In the present embodiment, the navigation system 60 is described as being applied to the inertial navigation system, but is not particularly limited, and any navigation system 60 may be used. In addition, in the present embodiment, the navigation system 60 is an inertial navigation system including a global positioning system (GPS) as a position measurement unit in order to improve the measurement accuracy of the position. In the present embodiment, the inertial navigation system including the GPS is applied and described. However, the present disclosure is not particularly limited to the GPS, and any position measurement unit capable of accurately measuring a position may be used. For example, a quasi-zenith satellite system may be used, and a configuration in which the position measurement unit such as the GPS is omitted may be used as long as the position can be accurately measured only by the navigation system 60. In addition, the navigation system 60 may acquire at least a part of various types of data by a sensor.

The RTK positioning processing unit 70 is included in an automatic landing system 100 (to be described later), and a satellite positioning method using an artificial satellite 200 (refer to FIG. 3) is applied to the RTK positioning processing unit 70. That is, the RTK positioning processing unit 70 is a real time kinematic (RTK)-GPS, and measures position coordinates of the landing target point 2 based on carrier phase data transmitted from the artificial satellite 200 to the landing target point 2 with a position of the artificial satellite 200 as a reference point. The RTK-GPS receives signals from a plurality of satellites by receivers in two mobile stations. The RTK-GPS exchanges information between two receivers based on the signals received from the plurality of satellites to correct a deviation and obtain high-precision position information. The RTK-GPS can suppress an error within several centimeters. The RTK positioning processing unit 70 includes an antenna 70a, and measures position coordinates (Xa, Ya) or position coordinates (Xa, Ya, Za) of the landing target point 2 with the position of the artificial satellite 200 as a reference point by using the RTK-GPS.

The data transmission device 80 is included in the automatic landing system 100 (to be described later) and exchanges various signals with the data transmission device 40 mounted on the vertical take-off and landing aircraft 1 through wireless communication. The data transmission device 80 transmits the position coordinates (Xa, Ya) of the landing target point 2 in the ship 5 measured by the RTK positioning processing unit 70 to the data transmission device 40. The operation display unit 90 is a user interface through which an operator on board the ship 5 grasps a control status and inputs various instructions. As the instruction input by the operator through the operation display unit 90, for example, a transition instruction of a control mode to be described later is included. The details of the transition instruction will be described later. The instruction input in the operation display unit 90 is transmitted from the data transmission device 80 to the data transmission device 40. In addition, the control status of the vertical take-off and landing aircraft 1 is transmitted from the data transmission device 40 to the data transmission device 80. That is, the data transmission device 40 and the data transmission device 80 can perform bidirectional communication.

### (Automatic Landing System)

As shown in FIG. 1, an automatic landing system 100 for a vertical take-off and landing aircraft according to the first embodiment is a system that controls a position of a vertical take-off and landing aircraft 1 in flight to land the vertical take-off and landing aircraft 1 on a landing target point 2. The automatic landing system 100 is mounted on the vertical take-off and landing aircraft 1. The automatic landing system 100 includes a navigation system 20, a control unit 30, and a data transmission device 40. The automatic landing system 100 is a control device, and the control device is a controller realized, for example, by a CPU (Central Processing Unit), an MPU (Micro Processing Unit), or the like executing various programs stored in a storage unit using a RAM as a work area.

### (Navigation System)

The navigation system 20 is an inertial navigation system including, for example, a GPS, as in the navigation system 60. The navigation system 20 may be an inertial navigation system including a position measurement unit such as GPS, as in the navigation system 60, or may be an inertial navigation system excluding a position measurement unit such as GPS, and is not particularly limited. The navigation system 20 including the GPS acquires the attitude angle in the pitch direction and the roll direction of the vertical take-off and landing aircraft 1, the aircraft heading, the aircraft velocity, the aircraft acceleration, and the position coordinates in the earth coordinate system of the vertical take-off and landing aircraft 1. The navigation system 20 may have an attitude angle sensor that detects the attitude angle of the vertical take-off and landing aircraft 1, a speed detection sensor that detects an aircraft velocity of the vertical take-off and landing aircraft 1, an acceleration detection sensor that detects the aircraft acceleration of the vertical take-off and landing aircraft 1, and a sensor that detects an aircraft heading of the vertical take-off and landing aircraft 1. The navigation system 20 outputs the acquired attitude angle, the aircraft velocity, the aircraft acceleration, and the position coordinates of the vertical take-off and landing aircraft 1 to the control unit 30.

The automatic landing system 100 includes an altitude sensor 25 that detects an altitude of the vertical take-off and landing aircraft 1 from a ground surface or a water surface. The altitude sensor 25 is, for example, a laser altimeter, and measures a relative altitude Δh (refer to FIG. 2) from the vertical take-off and landing aircraft 1 to the landing target point 2. As the altitude sensor 25, a radio altimeter, a barometric altimeter, or any altimeter may be used. In addition, the altimeters may be appropriately combined and applied to measure an altitude from a ground surface or an altitude from a sea surface according to a use environment. The altitude sensor 25 outputs the detected relative altitude Δh of the vertical take-off and landing aircraft 1 to the control unit 30. The altitude sensor 25 measures the altitude of the vertical take-off and landing aircraft 1 and outputs the altitude to the control unit 30, and the control unit 30 may calculate the relative altitude Δh (refer to FIG. 2) to the landing target point 2 based on the altitude of the vertical take-off and landing aircraft 1 in a guidance calculation unit 34 (to be described later). In addition, the automatic landing system 100 is not limited to the altitude sensor 25, and may calculate the relative altitude Δh between the vertical take-off and landing aircraft 1 and the ship 5 by performing image processing on an image captured by a camera. The relative altitude Δh between the vertical take-off and landing aircraft 1 and the ship 5 may be obtained using the relative position (Z) between the vertical take-off and landing aircraft 1 and the landing target point 2, which will be described later.

### (Control Unit)

The control unit 30 includes an RTK positioning processing unit (aircraft relative position measurement unit) 32, a guidance calculation unit 34, and a flight control unit 36.

### (RTK Positioning Processing Unit)

The RTK positioning processing unit 32 applies a satellite positioning system using the artificial satellite 200, similarly to the RTK positioning processing unit 70 described above. That is, the RTK positioning processing unit 32 measures position coordinates of the vertical take-off and landing aircraft 1 based on carrier phase data transmitted from the artificial satellite 200 to the vertical take-off and landing aircraft 1 with the position of the artificial satellite 200 as a reference point. The RTK-GPS receives signals from a plurality of satellites by receivers in two mobile stations. In RTK-GPS, information is exchanged between two receivers based on signals received from a plurality of satellites, and a deviation is corrected to obtain highly accurate position information. The RTK positioning processing unit 32 includes an antenna 32a and measures position coordinates (Xb, Yb) or position coordinates (Xb, Yb, Zb) of the vertical take-off and landing aircraft 1 with the position of the artificial satellite 200 as a reference point using RTK-GPS. However, since the RTK positioning processing unit 32 is mounted on the vertical take-off and landing aircraft 1, when the vertical take-off and landing aircraft 1 lands on the ship 5, a blind spot is generated in which the radio signal of the artificial satellite 200 does not reach the vertical take-off and landing aircraft 1 due to the structure 9 of the ship 5. In other words, among the plurality of artificial satellites 200, an artificial satellite 200 that falls within the blind spot is present. For example, as shown in FIG. 3, when the vertical take-off and landing aircraft 1 lands on the landing target point 2 of the ship 5, a blind spot 210 in which the radio signal of the artificial satellite 200d does not reach the antenna 32a of the vertical take-off and landing aircraft 1 is generated. In this case, the RTK positioning processing unit 32 sets the blind spot 210 according to the surrounding situation (the structure 9 of the ship 5 or the like) with respect to the antenna 32a, selects the artificial satellites 200a, 200b, 200c, and 200d that do not fall within the blind spot 210, and measures the position coordinates (Xb, Yb) or the position coordinates (Xb, Yb, Zb) of the vertical take-off and landing aircraft 1 using the selected artificial satellites 200a, 200b, 200c, and 200d.

### (Guidance Calculation Unit)

The guidance calculation unit 34 calculates a control amount of the vertical take-off and landing aircraft 1 for guiding the vertical take-off and landing aircraft 1 to the landing target point 2. The control amount is a control amount for adjusting the aircraft velocity, the attitude angle, a change rate of the attitude angle, and the like of the vertical take-off and landing aircraft 1. The guidance calculation unit 34 calculates a relative position (X, Y) between the vertical take-off and landing aircraft 1 and the landing target point 2 and a relative speed between the vertical take-off and landing aircraft 1 and the landing target point 2 in order to calculate the control amount. The guidance calculation unit 34 may calculate a relative position (X, Y, Z) between the vertical take-off and landing aircraft 1 and the landing target point 2 and a relative speed between the vertical take-off and landing aircraft 1 and the landing target point 2. In addition, the guidance calculation unit 34 may be provided in the ship 5, and may calculate the control amount of the vertical take-off and landing aircraft 1, the relative position (X, Y) and the relative speed between the vertical take-off and landing aircraft 1 and the landing target point 2 on the ship 5 side.

As shown in FIGS. 1 and 4, the guidance calculation unit 34 performs processing using three coordinates, that is, an earth coordinate system, a ship inertial system, and an aircraft inertial system. That is, the guidance calculation unit 34 performs calculation using an aircraft heading ψa of the ship 5 acquired from the inertial navigation system of the navigation system 60, an aircraft heading ψb of the vertical take-off and landing aircraft 1 acquired from the inertial navigation system of the navigation system 60, a relative position Lsen (Lx, Ly, Lz) between the antennas 32a and 70a measured by the RTK positioning processing units 32 and 70, an offset value OFSETa between the landing target point 2 and the antenna 70a in the ship 5, and an offset value OFSETb between the camera 10 and the antenna 32a in the vertical take-off and landing aircraft 1. First, the relative position Lsen (Lx, Ly, Lz) between the antennas 32a and 70a is subjected to coordinate transformation to the ship inertial system using the aircraft heading ψa of the ship 5. Next, the offset value OF SETa is subtracted from the result of the coordinate transformation to the ship inertial system to calculate a relative distance (ship inertial system) from the landing target point 2 to the antenna 32a in the vertical take-off and landing aircraft 1. Subsequently, the calculated relative distance (ship inertial system) is subjected to coordinate transformation to the aircraft inertial system using the aircraft heading ψa of the ship 5 and the aircraft heading ψb of the vertical take-off and landing aircraft 1 to calculate a relative distance (aircraft inertial system) from the antenna 32a to the landing target point 2. Then, the offset value OFSETb is subtracted from the calculated relative distance (aircraft inertial system) to calculate a relative position Lab (aircraft inertial system) from an aircraft reference point (position of the camera 10) to the landing target point 2. Hereinafter, the relative position Lab (aircraft inertial system) is referred to as a relative position (X, Y, Z). The relative position Lab (aircraft inertial system) may be used after being transformed into the ship inertial system as necessary. In addition, the earth coordinate system is a three-dimensional coordinate system in which three directions of North-East-Down are positive, and is also referred to as a local horizontal coordinate system. The ship inertial system is a coordinate system in which the landing target point 2 is an origin, and a direction along the ship heading of the ship 5, a direction orthogonal to the ship heading of the ship 5 in the horizontal direction, and a vertical direction are orthogonal axes. In addition, the aircraft inertial system is a coordinate system with the vertical take-off and landing aircraft 1 as an origin, a direction along the aircraft heading of the vertical take-off and landing aircraft 1 is an X-axis, a direction orthogonal to the aircraft heading of the vertical take-off and landing aircraft 1 in a horizontal direction is a Y-axis, and a vertical direction is a Z-axis.

In addition, the guidance calculation unit 34 calculates a relative position (X_{GPS}, Y_{GPS}) between the vertical take-off and landing aircraft 1 and the landing target point 2 based on position coordinates (Xb, Yb) of the vertical take-off and landing aircraft 1 acquired by the navigation system 20 and position coordinates (Xa, Ya) of the ship 5 acquired by the navigation system 60 of the ship 5 and obtained through communication between the data transmission devices 40 and 80, or further calculates a relative position (X_{GPS}, Y_{GPS}, Z_{GPS}) using position coordinates (Za) and (Zb). The guidance calculation unit 34 may directly calculate the relative position (X_{GPS}, Y_{GPS}) without using the position coordinates (Xb, Yb) of the vertical take-off and landing aircraft 1 and the position coordinates (Xa, Ya) of the ship 5. Therefore, the guidance calculation unit 34 functions as a relative position acquisition unit that calculates the relative position (X_{GPS}, Y_{GPS}) or the relative position (X_{GPS}, Y_{GPS}, Z_{GPS}) between the vertical take-off and landing aircraft 1 and the landing target point 2 based on the position coordinates (Xb, Yb) of the vertical take-off and landing aircraft 1 acquired by the RTK positioning processing unit 32 and the position coordinates (Xa, Ya) of the ship 5 provided with the landing target point 2 acquired by the RTK positioning processing unit 70 and transmitted by the data transmission device 40.

In addition, the guidance calculation unit 34 calculates the relative speed between the vertical take-off and landing aircraft 1 and the landing target point 2. Therefore, the guidance calculation unit 34 functions as a relative speed acquisition unit that acquires the relative speed between the vertical take-off and landing aircraft 1 and the landing target point 2. More specifically, the guidance calculation unit 34 calculates the relative speed, for example, based on a difference between the aircraft velocity of the vertical take-off and landing aircraft 1 acquired by the navigation system 20 and the hull speed of the ship 5 acquired by the navigation system 60. In addition, the guidance calculation unit 34 may calculate the relative speed based on a pseudo-differentiation of the relative position (X, Y). That is, the guidance calculation unit 34 functions as a relative speed acquisition unit that acquires the relative speed. In addition, the guidance calculation unit 34 calculates the relative heading between the aircraft heading of the vertical take-off and landing aircraft 1 and the ship heading of the ship 5. **In** this way, the guidance calculation unit 34 functions as a relative heading acquisition unit that acquires the relative heading between the vertical take-off and landing aircraft 1 and the landing target point 2.

**In** addition, the guidance calculation unit 34 calculates the relative altitude Δh to the landing target point 2, based on the altitude of the vertical take-off and landing aircraft 1 detected by the altitude sensor 25. Therefore, the altitude sensor 25 and the guidance calculation unit 34 function as a relative altitude acquisition unit that acquires the relative altitude Δh between the vertical take-off and landing aircraft 1 and the landing target point 2.

Then, the guidance calculation unit 34 calculates a control amount by feedback control (for example, PID control) based on the relative position (X, Y), the relative speed, the relative heading, and the aircraft acceleration. In the first embodiment, the guidance calculation unit 34 calculates the control amount of the vertical take-off and landing aircraft 1 by feedback control such that the relative position (X, Y) and the relative heading are zero. In addition, the guidance calculation unit 34 may calculate the control amount of the vertical take-off and landing aircraft 1 by feedback control such that the relative speed is within a predetermined speed range and the aircraft acceleration is within a predetermined acceleration range. The predetermined speed range and the predetermined acceleration range are set so as to satisfy a state where the vertical take-off and landing aircraft 1 can be said to be flying stably at the predetermined relative altitude Δh. For example, the predetermined speed is zero, and the predetermined acceleration is zero. The guidance calculation unit 34 outputs the calculated control amount to the flight control unit 36. In calculating such a control amount, the guidance calculation unit 34 controls the vertical take-off and landing aircraft 1 in a plurality of control modes to guide the vertical take-off and landing aircraft 1 to the landing target point and land the vertical take-off and landing aircraft 1. The plurality of control modes include an approach mode, a hovering mode including a high-altitude hovering mode and a low-altitude hovering mode, and a landing mode. Details of each control mode will be described later.

### (Flight Control Unit)

The flight control unit 36 controls each component of the vertical take-off and landing aircraft 1 to fly the vertical take-off and landing aircraft 1 in accordance with the control amount calculated by the guidance calculation unit 34. The flight control unit 36 controls a blade pitch angle, the rotation speed, and the like of each rotor blade according to the control amount, and adjusts the aircraft velocity, the attitude angle, the change rate of the attitude angle, and the like of the vertical take-off and landing aircraft 1. Accordingly, the vertical take-off and landing aircraft 1 is guided to the landing target point 2.

In the first embodiment, the RTK positioning processing unit 32 and the guidance calculation unit 34 are described as functional units different from the flight control unit 36, but the RTK positioning processing unit 32 and the guidance calculation unit 34 may be functional units integrated with the flight control unit 36. In the flight control unit 36, the processing of the RTK positioning processing unit 32 and the guidance calculation unit 34 may be performed.

### (Landing Control Method of Vertical Take-off and Landing Aircraft)

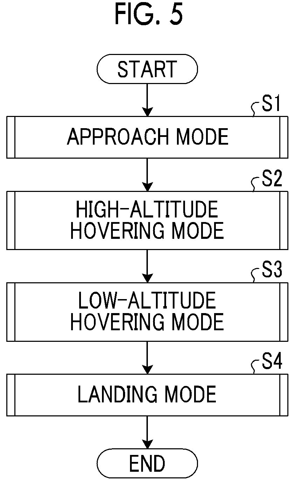

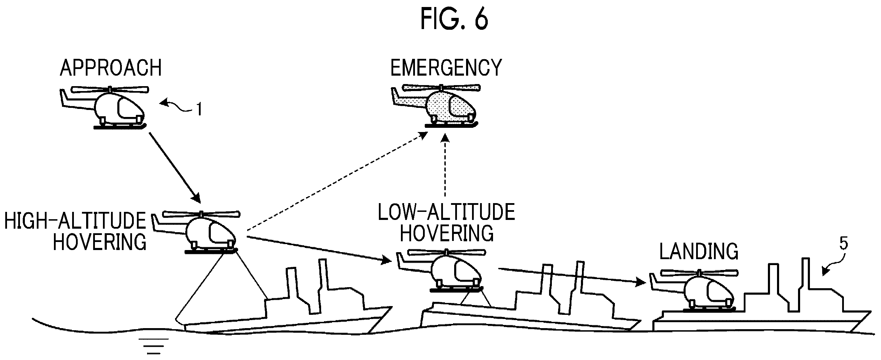

Next, a procedure for guiding the vertical take-off and landing aircraft 1 to the landing target point 2 and landing the vertical take-off and landing aircraft 1 at the landing target point 2 by the control unit 30 will be described as a landing control method of the vertical take-off and landing aircraft according to the present embodiment. FIG. 5 is a flowchart showing an example of a processing procedure of the landing control method for the vertical take-off and landing aircraft according to the present embodiment, and FIG. 6 is an explanatory view showing a landing operation of the vertical take-off and landing aircraft.

As shown in FIGS. 5 and 6, the vertical take-off and landing aircraft 1 executes a plurality of control modes in a series of landing operations of landing on the ship 5 from a flight state. Specifically, the vertical take-off and landing aircraft 1 performs a series of landing operations by sequentially performing step S1 of executing an approach mode, step S2 of executing a high-altitude hovering mode, step S3 of executing a low-altitude hovering mode, and step S4 of executing a landing mode. In addition, the vertical take-off and landing aircraft 1 performs a step (step S19 described later) of executing an emergency mode in which the execution of the high-altitude hovering mode and the low-altitude hovering mode is interrupted and the landing operation is interrupted.

The approach mode is a mode in which the vertical take-off and landing aircraft 1 is caused to enter the deck of the ship 5 in response to an instruction from the ship 5 and the vertical take-off and landing aircraft 1 is caused to hover on the landing target point 2. The high-altitude hovering mode is a mode in which the vertical take-off and landing aircraft 1 is caused to hover at a predetermined high altitude above the landing target point 2. The low-altitude hovering mode is a mode in which the vertical take-off and landing aircraft 1 performs a descent and performs low-altitude hovering at an altitude lower than that in the high-altitude hovering mode. The landing mode is a mode in which the vertical take-off and landing aircraft 1 lands on the landing target point 2. The emergency mode is a mode in which the vertical take-off and landing aircraft 1 interrupts the landing operation on the ship 5 and ascends.

The vertical take-off and landing aircraft 1 is capable of sequentially performing step S1 of executing the approach mode, step S2 of executing the high-altitude hovering mode, step S3 of executing the low-altitude hovering mode, and step S4 of executing the landing mode.

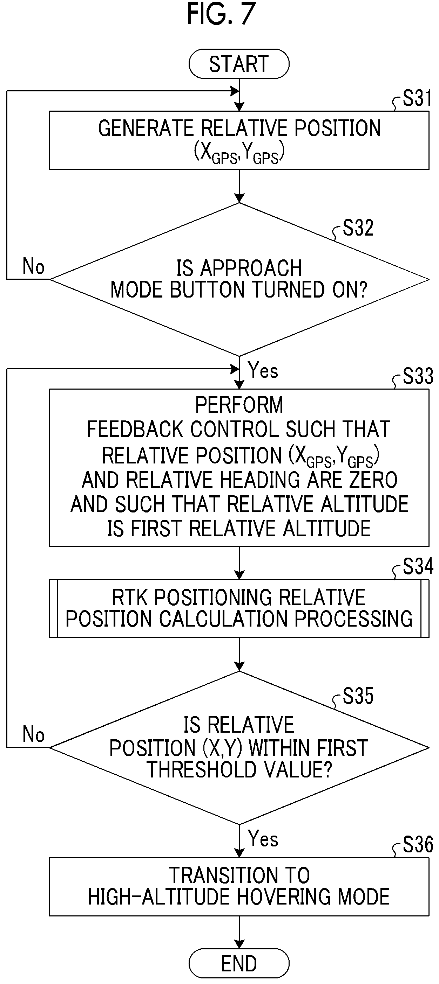

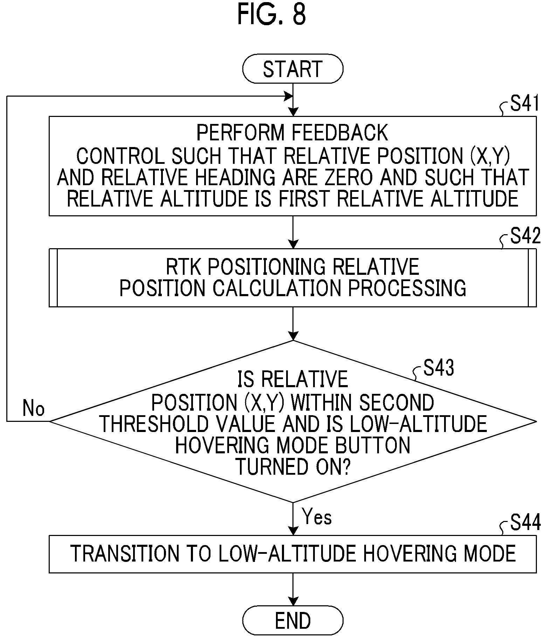

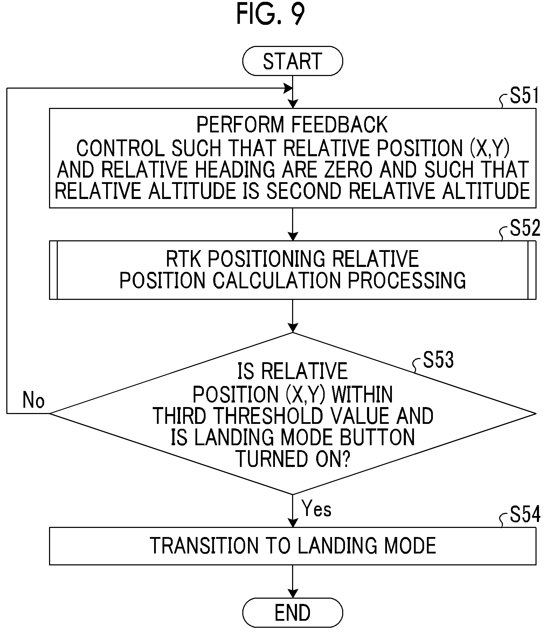

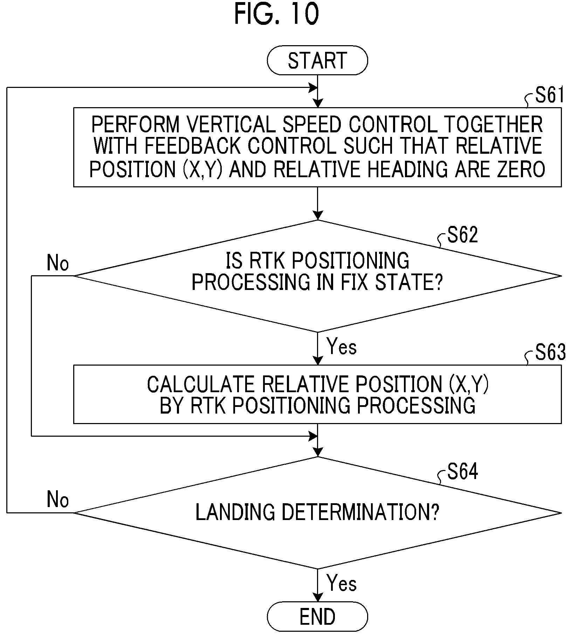

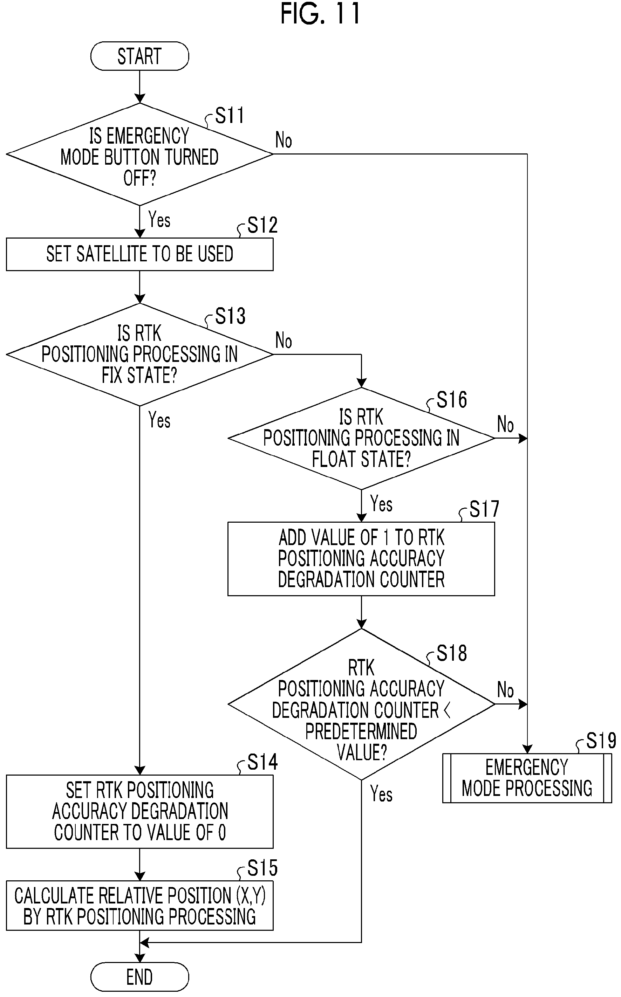

Here, each control mode will be specifically described. FIG. 7 is a flowchart showing an example of a processing procedure in an approach mode, FIG. 8 is a flowchart showing an example of a processing procedure in a high-altitude hovering mode, FIG. 9 is a flowchart showing an example of a processing procedure in a low-altitude hovering mode, FIG. 10 is a flowchart showing an example of a processing procedure in a landing mode, FIG. 11 is a flowchart showing an example of relative position calculation processing. The processing shown in FIGS. 7 to 11 is executed by the guidance calculation unit 34.

### (Approach Mode)

The guidance calculation unit 34 executes the approach mode (step S1 in FIG. 5). The approach mode will be described in detail with reference to FIG. 7. As step S31, the guidance calculation unit 34 calculates (generates) the relative position (X_{GPS}, Y_{GPS}) from the position coordinates obtained by the navigation systems 20 and 60, that is, GPS.

Next, as step S32, the guidance calculation unit 34 determines whether or not the approach mode button is turned on. The approach mode button is a button for inputting a transition instruction for the control mode provided in an operation display unit 90 of the ship 5, and is turned on and off by an operator on board the ship 5. When the preparation for the landing of the vertical take-off and landing aircraft 1 on the ship 5 is completed, the operator turns on the approach mode button. In a case where the control unit 30 determines that the approach mode button is not turned on (No in step S32), the control unit 30 continues the process in step S31. On the other hand, in a case where it is determined that the approach mode button is turned on (Yes in step S32), the control unit 30 proceeds to the process in step S33.

As step S33, the guidance calculation unit 34 executes feedback control such that the relative position (X_{GPS}, Y_{GPS}) generated in step S31 is zero. In this manner, the guidance calculation unit 34 causes the vertical take-off and landing aircraft 1 to fly toward the landing target point 2 in the horizontal direction. In addition, the guidance calculation unit 34 executes feedback control such that the relative heading between the calculated aircraft heading of the vertical take-off and landing aircraft 1 and the ship heading of the ship 5 is zero, for example. In this manner, the guidance calculation unit 34 causes the vertical take-off and landing aircraft 1 to fly such that the aircraft heading of the vertical take-off and landing aircraft 1 coincides with the ship heading of the ship 5 in the horizontal direction. As an example, the guidance calculation unit 34 executes feedback control such that the relative heading is zero, but is not particularly limited, and the relative heading need not be zero. Further, the guidance calculation unit 34 executes feedback control such that the relative altitude Δh measured by the altitude sensor 25 is a first relative altitude Δh1. In this manner, the guidance calculation unit 34 maintains the vertical take-off and landing aircraft 1 at the first relative altitude Δh1 (refer to FIG. 2) while descending the vertical take-off and landing aircraft 1 from the initial altitude to the first relative altitude Δh1 in the vertical direction. The first relative altitude Δh1 is, for example, 8 m. In this way, in the approach mode, the flight control is performed on the vertical take-off and landing aircraft 1 such that the vertical take-off and landing aircraft 1 is within a predetermined range of the landing target point 2 by controlling the relative position (X_{GPS}, Y_{GPS}) to be zero.

As step S34, the guidance calculation unit 34 executes RTK positioning relative position calculation processing to calculate a relative position (X, Y) as a distance in the horizontal direction between the vertical take-off and landing aircraft 1 and the landing target point 2. Details of the RTK positioning relative position calculation processing will be described later.

As step S35, the guidance calculation unit 34 determines whether or not the relative position (X, Y) between the vertical take-off and landing aircraft 1 and the landing target point 2, which represents the distance in the horizontal direction and is calculated in step S34, is within the threshold value. In a case where it is determined that the relative position (X, Y) is not within the threshold value (No in step S35), the guidance calculation unit 34 executes the processes after step S33 again. That is, the vertical take-off and landing aircraft 1 is not sufficiently close to the landing target point 2, and thus the processes of step S33 and subsequent steps are executed again. Then, the guidance calculation unit 34 repeatedly executes the processes of step S33 and subsequent steps until the vertical take-off and landing aircraft 1 is at a distance sufficiently close to the landing target point 2. In a case where the guidance calculation unit 34 determines that the relative position (X, Y) is within the threshold value (Yes in step S35), the vertical take-off and landing aircraft 1 is considered to be sufficiently close to the landing target point 2, and the guidance calculation unit 34 ends the approach mode and transitions to the high-altitude hovering mode as step S36.

### (High-altitude Hovering Mode)

Returning to the description of FIG. 5, when the approach mode is ended, the guidance calculation unit 34 executes the high-altitude hovering mode as step S2. The high-altitude hovering mode will be described in detail with reference to FIG. 8. In the high-altitude hovering mode, as step S41, the guidance calculation unit 34 executes feedback control such that the relative position (X, Y) calculated by the RTK positioning relative position calculation processing is zero. In addition, the guidance calculation unit 34 executes feedback control such that the relative heading between the calculated aircraft heading of the vertical take-off and landing aircraft 1 and the ship heading of the ship 5 is zero, for example. Further, the guidance calculation unit 34 executes feedback control such that the relative altitude Δh measured by the altitude sensor 25 is a first relative altitude Δh1. In this manner, the guidance calculation unit 34 maintains the first relative altitude Δh1 while hovering the vertical take-off and landing aircraft 1 directly above the landing target point 2 in the vertical direction. Then, as step S42, the guidance calculation unit 34 executes the RTK positioning relative position calculation processing again.

As step S43, the guidance calculation unit 34 determines whether or not the relative position (X, Y) calculated in step S42 is within a second threshold value and whether or not a low-altitude hovering mode button is turned on. The second threshold value is set as a value equal to or less than a first threshold value in the approach mode. In addition, the low-altitude hovering mode button is a button for inputting a transition instruction of a control mode provided in the operation display unit 90 of the ship 5, and is turned on and off by the operator on board the ship 5. The operator visually confirms whether or not the vertical take-off and landing aircraft 1 can stably fly at the first relative altitude Δh1, and turns on a low-altitude hovering button in a case where the vertical take-off and landing aircraft 1 can stably fly. In step S43, it is determined whether or not a first condition for transitioning from the high-altitude hovering mode to the low-altitude hovering mode is satisfied. That is, in the first embodiment, the first condition includes that the relative position (X, Y) is within the second threshold value and that the operator gives an instruction to mode transition to the low-altitude hovering mode.

In a case where it is determined that the relative position (X, Y) is not within the second threshold value (No in step S43), the guidance calculation unit 34 executes the processes after step S41 again. In addition, even in a case where it is determined that the low-altitude hovering mode button is not turned on (No in step S43), the guidance calculation unit 34 executes the processes of step S41 and subsequent steps again. Then, the guidance calculation unit 34 repeatedly executes the processes of step S41 and subsequent steps until the relative position (X, Y) of the vertical take-off and landing aircraft 1 with respect to the landing target point 2 is within the second threshold value. In a case where it is determined that the relative position (X, Y) is within the second threshold value and the low-altitude hovering mode button is turned on (Yes in step S43), the guidance calculation unit 34 ends the high-altitude hovering mode and transitions to the landing mode as step S44.

### (Low-Altitude Hovering Mode)

Returning to the description of FIG. 5, when the high-altitude hovering mode is ended, the guidance calculation unit 34 executes the low-altitude hovering mode as step S3. The low-altitude hovering mode will be described in detail with reference to FIG. 9. In the low-altitude hovering mode, as shown in step S51, the guidance calculation unit 34 executes feedback control such that the relative position (X, Y) calculated in the RTK positioning relative position calculation processing is zero. In addition, the guidance calculation unit 34 executes feedback control such that the relative heading between the calculated aircraft heading of the vertical take-off and landing aircraft 1 and the ship heading of the ship 5 is zero, for example. Furthermore, the guidance calculation unit 34 executes feedback control such that the relative altitude Δh measured by the altitude sensor 25 is the second relative altitude Δh2 lower than the first relative altitude Δh1. Accordingly, the guidance calculation unit 34 causes the vertical take-off and landing aircraft 1 to hover directly above the landing target point 2 and causes the altitude of the vertical take-off and landing aircraft 1 to be lowered to the second relative altitude Δh2 (refer to FIG. 2). The second relative altitude Δh2 is, for example, 3 m. At this time, the guidance calculation unit 34 sets the descent speed of the vertical take-off and landing aircraft 1 as the first descent speed. The first descent speed is, for example, 0.6 m/s. Then, the guidance calculation unit 34 executes the RTK positioning relative position calculation processing again as step S52.

As step S53, the guidance calculation unit 34 determines whether or not the relative position (X, Y) calculated in step S52 is within a third threshold value (predetermined threshold value) and whether or not the landing mode button is turned on. The third threshold value is set to a value equal to or less than the second threshold value in the high-altitude hovering. In addition, the landing mode button is a button for inputting a transition instruction of the control mode provided in the operation display unit 90 of the ship 5, and is turned on and off by the operator who is on the ship 5. The operator visually confirms whether or not the vertical take-off and landing aircraft 1 can stably fly at the second relative altitude Δh2, and turns on the landing mode button in a case where the vertical take-off and landing aircraft 1 can stably fly. In step S53, it is determined whether or not a second condition (predetermined condition) for transitioning from the low-altitude hovering mode to the landing mode is satisfied. That is, in the first embodiment, the second condition includes that the relative position (X, Y) is within the third threshold value and that the operator gives an instruction to mode transition to the landing mode. The operator may turn on the landing mode button even in a case where the vertical take-off and landing aircraft 1 is not stable.

In a case where it is determined that the relative position (X, Y) is not within the third threshold value (No in step S53), the guidance calculation unit 34 executes the processes after step S51 again. In addition, even in a case where it is determined that the landing mode button is not turned on (No in step S53), the guidance calculation unit 34 executes the processes of step S51 and subsequent steps again. Then, the guidance calculation unit 34 repeatedly executes the processes of step S51 and subsequent steps such that the vertical take-off and landing aircraft 1 is at a position where the relative position (X, Y) with respect to the landing target point 2 is within the third threshold value and descends to the second relative altitude Δh2. In a case where it is determined that the relative position (X, Y) is within the third threshold value and the landing mode button is turned on (Yes in step S53), the guidance calculation unit 34 ends the low-altitude hovering mode and transitions to the landing mode as step S54.

### (Landing Mode)

Returning to the description of FIG. 5, when the low-altitude hovering mode is ended, as step S4, the guidance calculation unit 34 executes the landing mode. The landing mode will be described in detail with reference to FIG. 10. In the landing mode, the guidance calculation unit 34 executes feedback control such that the relative position (X, Y) calculated in the RTK positioning relative position calculation processing is zero, as step S61. In addition, the guidance calculation unit 34 executes feedback control such that the relative heading between the calculated aircraft heading of the vertical take-off and landing aircraft 1 and the ship heading of the ship 5 is zero, for example. Further, the guidance calculation unit 34 executes the vertical speed control in which the descent rate is constant until the relative altitude Δh, as measured by the altitude sensor 25, reaches the third relative altitude Δh3. The descent rate is a rate of descent in altitude per unit of time. In the vertical speed control, the guidance calculation unit 34 sets the descent speed of the vertical take-off and landing aircraft 1 as a second descent speed. Accordingly, the guidance calculation unit 34 causes the relative altitude Δh of the vertical take-off and landing aircraft 1 to descend to the third relative altitude Δh3 (refer to FIG. 2). The third relative altitude Δh3 is, for example, 10 cm. In addition, the second descent speed is, for example, 1.0 m/s. In the present embodiment, in order to quickly land the vertical take-off and landing aircraft 1 on the landing target point 2 in the landing mode, the second descent speed is set to be higher than the first descent speed. However, the first descent speed and the second descent speed may be set such that either one is greater or may be set to be the same value. Further, when the altitude of the vertical take-off and landing aircraft 1 reaches the third relative altitude Δh3, the guidance calculation unit 34 further causes the vertical take-off and landing aircraft 1 to descend while holding the control amount related to the attitude angle of the vertical take-off and landing aircraft 1 when the altitude of the vertical take-off and landing aircraft 1 reaches the third relative altitude Δh3.

As step S62, the RTK positioning processing unit 32 determines whether or not the RTK positioning is in the FIX state. Whether or not the RTK positioning is in the FIX state can be calculated by the same process as step S13 of the RTK positioning relative position calculation processing described later. Here, the RTK positioning is the position accuracy acquired by the RTK positioning processing unit 32, and the FIX state has the highest accuracy, and the FLOAT state has the second highest accuracy. When the RTK positioning processing unit 32 determines that the RTK positioning is in the FIX state (Yes in step S62), as step S63, the guidance calculation unit 34 calculates the relative position (X, Y) by the RTK positioning processing. The relative position (X, Y) can be calculated by the same process as step S15 of the RTK positioning relative position calculation processing described later. On the other hand, when the RTK positioning processing unit 32 determines that the RTK positioning is not in the FIX state (No in step S62), the RTK positioning processing unit 32 omits the process of step S63 and proceeds to step S64. In the first embodiment, in the landing mode, the vertical take-off and landing aircraft 1 is in a state of being sufficiently close to the landing target point 2, and the landing mode is continuously executed on the assumption that the vertical take-off and landing aircraft 1 can land in the vicinity of the landing target point 2. In a case where the vertical take-off and landing aircraft 1 is a manned aircraft, the execution of the landing mode may be interrupted based on the determination of the pilot during the execution of the landing mode.

As step S64, the flight control unit 36 determines whether or not the vertical take-off and landing aircraft 1 has landed on the landing target point 2. Whether or not the vertical take-off and landing aircraft 1 has landed on the landing target point 2 can be determined, for example, by providing a contact-type sensor on a leg portion (not shown) of the vertical take-off and landing aircraft 1. In a case where it is determined that the vertical take-off and landing aircraft 1 has not landed on the landing target point 2 (No in step S64), the flight control unit 36 performs the processes after step S61 again. In this way, the vertical take-off and landing aircraft 1 is controlled to descend according to the procedure in step S61 until the vertical take-off and landing aircraft 1 lands on the landing target point 2. Then, in a case where the flight control unit 36 determines that the vertical take-off and landing aircraft 1 has landed on the landing target point 2 (Yes in step S64), the guidance calculation unit 34 ends the landing mode. Accordingly, the process routine shown in FIG. 3 is also ended.

### (RTK Positioning Relative Position Calculation Processing)

Next, the RTK positioning relative position calculation processing will be described with reference to FIG. 11. In the RTK positioning relative position calculation processing, as step S11, the guidance calculation unit 34 determines whether or not the emergency mode button is turned off. The emergency mode button is provided in the operation display unit 90 of the ship 5 and is turned on and off by an operator on board the ship 5. When the operator determines landing of the vertical take-off and landing aircraft 1 on the ship 5 needs to be interrupted, the operator turns on the emergency mode button. Specifically, when the operator visually confirms that the flight state of the vertical take-off and landing aircraft 1 is unstable due to, for example, the influence of wind or the occurrence of some kind of failure, the operator turns on the emergency mode button.

In step S11, in a case where it is determined that the emergency mode button is turned on (No in step S11), as step S19, the guidance calculation unit 34 transitions to execute the emergency mode. In the emergency mode, the guidance calculation unit 34 causes the vertical take-off and landing aircraft 1 to temporarily ascend to a predetermined altitude (for example, 20 m) sufficiently away from the ship 5 and to maintain the current relative position (X, Y). In a case of transition to the emergency mode, the guidance calculation unit 34 can execute the emergency mode during execution of step S2 of executing the high-altitude hovering mode and step S3 of executing the low-altitude hovering mode shown in FIG. 3. When the vertical take-off and landing aircraft 1 temporarily ascends to the altitude sufficiently away from the ship 5 by executing the emergency mode, the guidance calculation unit 34 resumes the process from step S1 shown in FIG. 5 again.

On the other hand, when the guidance calculation unit 34 determines that the emergency mode button is turned off (Yes in step S11), the guidance calculation unit 34 selects the artificial satellite 200 to be used by the RTK positioning processing units 32 and 70 as step S12. In this case, the RTK positioning processing unit 32 selects and sets an artificial satellite 200 that does not fall within the blind spot 210 until the vertical take-off and landing aircraft 1 transitions from the approach mode to the landing mode and lands on the landing target point 2. As step S13, it is determined whether or not the RTK positioning by the RTK positioning processing unit 32 is in the FIX state. The RTK-GPS performs interference positioning calculation in real time to obtain positioning. The interference positioning calculation is performed by multiplying the wave number by the wavelength. However, when the carrier wave reaches the receiver, the decimal part of the wave can be grasped, but the integer part is unknown. In this case, the integer part is referred to as an integer value bias. Regarding the positioning solution, a solution obtained by the bias as an integer value is referred to as a FIX solution, and a solution obtained by the bias as a real number value is referred to as a FLOAT solution. The accuracy of the FIX solution is about 5 mm to 20 mm, and the accuracy of the FLOAT solution is about 10 cm to several meters.

When the RTK positioning processing unit 32 determines that the RTK positioning is in the FIX state (Yes in step S13), the RTK positioning processing unit 32 sets the RTK positioning accuracy degradation counter to a value of 0 as step S14. Then, as step S15, the guidance calculation unit 34 calculates the relative position Lab between the vertical take-off and landing aircraft 1 and the landing target point 2, that is, the relative position (X, Y, Z), based on the aircraft heading ψa and the aircraft heading ψb, the relative position Lsen (Lx, Ly, Lz), the offset value OFSETa, and the offset value OFSETb.

On the other hand, when the RTK positioning processing unit 32 determines that the RTK positioning is not in the FIX state in step S13 (No in step S13), the guidance calculation unit 34 determines whether or not the RTK positioning by the RTK positioning processing unit 32 is in the FLOAT state as step S16. When the RTK positioning processing unit 32 determines that the RTK positioning is in the FLOAT state (Yes in step S16), the RTK positioning processing unit 32 adds a value of 1 to the RTK positioning accuracy degradation counter as step S17, and determines whether or not the RTK positioning accuracy degradation counter is within a predetermined value as step S 18. When the guidance calculation unit 34 determines that the RTK positioning accuracy degradation counter is within the predetermined value (Yes in step S18), the guidance calculation unit 34 executes the processes of step S11 and subsequent steps again. When the guidance calculation unit 34 determines that the RTK positioning accuracy degradation counter is not within the predetermined value (No in step S18), the guidance calculation unit 34 proceeds to step S19 and transitions to the execution of the emergency mode. That is, the guidance calculation unit 34 determines that the time during which the RTK positioning is not in the FIX state is equal to or longer than a predetermined time when the RTK positioning accuracy degradation counter exceeds the predetermined value, and executes the emergency mode. In addition, when the RTK positioning processing unit 32 determines that the RTK positioning is not in the FLOAT state (No in step S16), the RTK positioning processing unit 32 proceeds to step S19 and transitions to the execution of the emergency mode. When the RTK positioning processing unit 32 determines that the RTK positioning is in the FLOAT state (Yes in step S16), the RTK positioning processing unit 32 may estimate the relative position (X, Y) between the vertical take-off and landing aircraft 1 and the landing target point 2 over a certain period.

### [Second Embodiment]

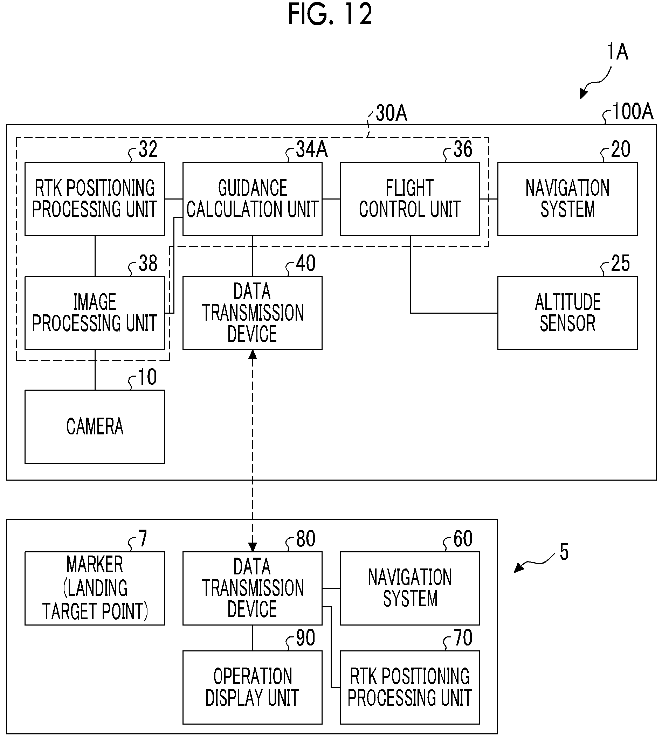

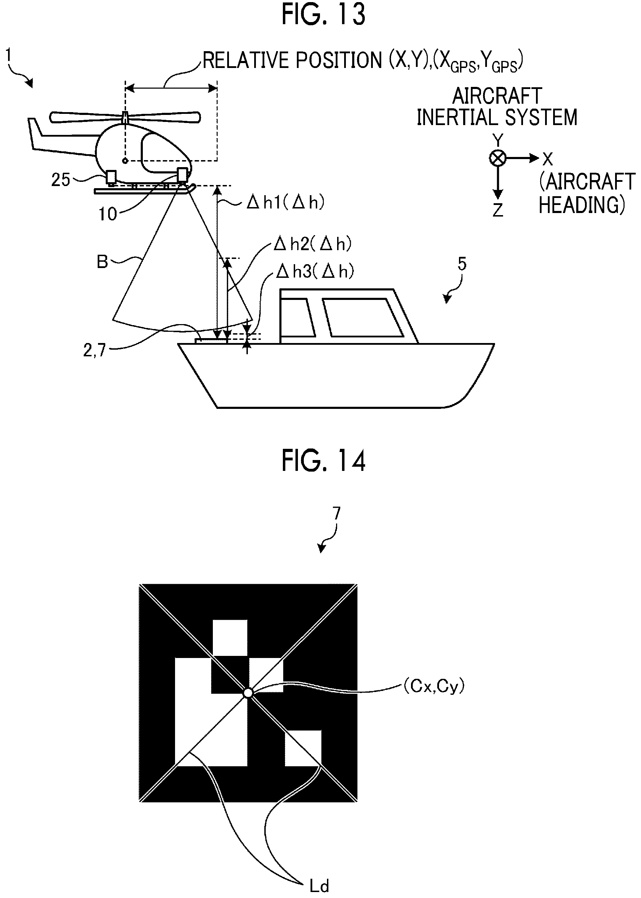

FIG. 12 is a schematic configuration diagram showing an example of an automatic landing system for a vertical take-off and landing aircraft according to a second embodiment, FIG. 13 is an explanatory view showing a state in which the vertical take-off and landing aircraft according to the second embodiment is heading toward a landing target point, FIG. 14 is an explanatory view showing an example of a marker provided at the landing target point.

As shown in FIG. 12, a vertical take-off and landing aircraft 1A according to the second embodiment is a flying object (for example, a helicopter, a drone, or the like) as a rotary-wing aircraft. The vertical take-off and landing aircraft 1A is equipped with an automatic landing system 100A, and the flight is controlled by the automatic landing system 100A to land on the landing target point 2 shown in FIG. 2.

### (Landing Target Point)

In the second embodiment, as shown in FIG. 13, the landing target point 2 is provided on the ship 5. The landing target point 2 is provided with a marker 7 for the vertical take-off and landing aircraft 1 to capture a position of the landing target point 2. FIG. 14 is an explanatory view showing an example of a marker provided at the landing target point. As shown in FIG. 14, the marker 7 is, for example, an AR marker color-coded in two colors of black and white, and is a square-shaped marker. The marker 7 is not limited to the AR marker, and may be any marker that can capture the position of the landing target point 2 by image processing, and may be, for example, an H mark or an R mark indicating a landing point of a heliport. In addition, a plurality of markers 7 having different shapes may be provided on the ship 5, and the vertical take-off and landing aircraft 1 may be guided to the landing target point 2 corresponding to any one of the different markers 7.

As shown in FIG. 1, the ship 5 includes a navigation system 60, an RTK positioning processing unit 70, a data transmission device 80, and an operation display unit 90. The ship 5 is the same as that in the first embodiment except that the marker 7 is provided at the landing target point 2.

### (Automatic Landing System)

An automatic landing system 100A for a vertical take-off and landing aircraft according to the second embodiment is a system that controls a position of the vertical take-off and landing aircraft 1 in flight to land the vertical take-off and landing aircraft 1 on a landing target point 2. The automatic landing system 100A is mounted on the vertical take-off and landing aircraft 1. The automatic landing system 100A includes a navigation system 20, a control unit 30A, and a data transmission device 40. The navigation system 20 and the data transmission device 40 are the same as those in the first embodiment.

### (Imaging Device)

A camera 10 is an imaging device mounted on a vertical take-off and landing aircraft 1A via a gimbal (not shown). The camera 10 may be a monocular camera, a stereo camera, an infrared camera, or the like, as long as the camera 10 can capture the marker 7. The camera 10 is provided to capture the marker 7 provided at the landing target point 2 from the vertical take-off and landing aircraft 1A. The camera 10 can adjust an imaging direction via a gimbal (not shown). In the second embodiment, the camera 10 is controlled by the control unit 30A such that an imaging range (angle of view) B (refer to FIG. 2) of the camera 10 faces directly below in the vertical direction, for example. The control unit 30 may control the camera 10 such that the imaging range B faces an oblique front side with respect to the vertical direction. In addition, the camera 10 may also be provided without a gimbal and may be fixed directly below the body of the vertical take-off and landing aircraft 1A so that the imaging direction faces, for example, the lower side in the vertical direction.

### (Control Unit)

The control unit 30A includes an RTK positioning processing unit 32, a guidance calculation unit 34A, a flight control unit 36, and an image processing unit 38. The RTK positioning processing unit 32 and the flight control unit 36 are the same as those in the first embodiment. Here, the control unit 30A includes an imaging control unit (not shown) that controls the imaging direction of the camera 10 via a gimbal (not shown) provided in the vertical take-off and landing aircraft 1A.

### (Image Processing Unit)

The image processing unit 38 performs image processing on the image captured by the camera 10 to calculate the center (Cx, Cy) (refer to FIG. 3) of the marker 7, that is, the landing target point 2. The center (Cx, Cy) here is a coordinate point in a camera fixed coordinate system in which the center of the image captured by the camera 10 is the origin, and can be calculated by the number of pixels from the center of the image. Specifically, as shown in FIG. 14, the image processing unit 38 specifies two diagonal lines Ld extending between corner portions of the marker 7 through image processing, and sets an intersection of the two specified diagonal lines Ld as the center (Cx, Cy) of the marker 7. The landing target point 2 is not limited to the center (Cx, Cy) of the marker 7, and may be any of the four corners of the marker 7 or a position offset from the center of the marker 7.

The image processing unit 38 may specify only one diagonal line Ld and may use the center position of the length of the specified diagonal line Ld as the center (Cx, Cy) of the marker 7. In addition, the image processing unit 38 may specify two or more diagonal lines Ld and may set a position that is an average of the center positions of the lengths of the specified diagonal lines Ld as the center (Cx, Cy) of the marker 7. Further, when the image processing unit 38 performs trapezoidal correction on the square-shaped marker 7 using the function of the projection transformation, the image processing unit 38 may calculate the center (Cx, Cy) of the square based on the function. In that case, trapezoidal correction may be performed using the coordinate points of the four corners of the marker 7 or the coordinate points of each point of the boundary of the marker 7 color-coded in black and white, and the other coordinate points may be calculated by interpolation. The image processing unit 38 outputs the calculated center (Cx, Cy) of the marker 7 to the guidance calculation unit 34A.

In addition, as described above, the image processing unit 38 may calculate the relative altitude Δh between the vertical take-off and landing aircraft 1A and the ship 5 by performing image processing on the image including the marker 7 captured by the camera 10. Further, the image processing unit 38 may specify a direction of the marker 7 by performing image processing on the image including the marker 7 captured by the camera 10, and may calculate the ship heading of the ship 5 by associating the direction of the marker 7 with the aircraft heading of the vertical take-off and landing aircraft 1A acquired by the navigation system 20. A marker for calculating the ship heading may be separately provided in the ship 5.

### (Guidance Calculation Unit)

The guidance calculation unit 34 calculates a control amount of the vertical take-off and landing aircraft 1 for guiding the vertical take-off and landing aircraft 1 to the landing target point 2. The guidance calculation unit 34 calculates a relative position (Xₘₐᵣₖ, Yₘₐᵣₖ, Zₘₐᵣₖ) between the vertical take-off and landing aircraft 1 and the landing target point 2 and a relative speed between the vertical take-off and landing aircraft 1 and the landing target point 2 in order to calculate the control amount.

As in the first embodiment, the guidance calculation unit 34A calculates the relative position Lab between the vertical take-off and landing aircraft 1 and the landing target point 2, that is, the relative position (X, Y, Z), based on the aircraft heading ψa and the aircraft heading ψb, the relative position Lsen (Lx, Ly, Lz), the offset value OFSETa, and the offset value OFSETb.

In addition, the guidance calculation unit 34A calculates the relative position (X, Y) between the vertical take-off and landing aircraft 1 and the landing target point 2 based on the center (Cx, Cy) of the marker 7 calculated by the image processing unit 38, the heading of the camera 10, that is, the aircraft heading of the vertical take-off and landing aircraft 1, and the altitude of the vertical take-off and landing aircraft 1 (the relative altitude Δh with respect to the landing target point 2). In the present embodiment, the heading of the camera 10 is made to coincide with the aircraft heading of the vertical take-off and landing aircraft 1. However, the present disclosure is not particularly limited thereto, and the heading of the camera 10 may not coincide with the aircraft heading of the vertical take-off and landing aircraft 1. The relative position (X, Y) is a distance between the vertical take-off and landing aircraft 1 and the landing target point 2 in the horizontal direction.

First, as in the first embodiment, the guidance calculation unit 34A calculates the relative position (X, Y) between the vertical take-off and landing aircraft 1 and the landing target point 2 based on the position coordinates (Xa, Ya) of the landing target point 2 measured by the RTK positioning processing unit 70, the position coordinates (Xb, Yb) of the vertical take-off and landing aircraft 1 measured by the RTK positioning processing unit 70, and the altitude of the vertical take-off and landing aircraft 1 (relative altitude Δh of the vertical take-off and landing aircraft 1 with respect to the landing target point 2). Then, when the relative position (X, Y) cannot be calculated by the processing of the RTK positioning processing unit 70, the guidance calculation unit 34A calculates the relative position (Xₘₐᵣₖ, Yₘₐᵣₖ) between the vertical take-off and landing aircraft 1 and the landing target point 2 based on the center (Cx, Cy) of the marker 7 calculated by the image processing unit 38, the heading of the camera 10, that is, the aircraft heading of the vertical take-off and landing aircraft 1, and the altitude of the vertical take-off and landing aircraft 1 (relative altitude Δh with respect to the landing target point 2).

That is, in the RTK positioning relative position calculation processing described in the first embodiment, when it is determined that the RTK positioning is not in the FLOAT state (No in step S16) or when it is determined that the RTK positioning accuracy degradation counter of the guidance calculation unit 34 is not within the predetermined value (No in step S18), the process does not proceed to the emergency mode processing in step S19, and the relative position (Xₘₐᵣₖ, Yₘₐᵣₖ) between the vertical take-off and landing aircraft 1 and the landing target point 2 is calculated based on the center (Cx, Cy) of the marker 7 calculated by the image processing unit 38, the heading of the camera 10, that is, the aircraft heading of the vertical take-off and landing aircraft 1, and the altitude of the vertical take-off and landing aircraft 1 (relative altitude Δh with respect to the landing target point 2).

### [Operational Effects of Present Embodiment]

An automatic landing system for a vertical take-off and landing aircraft according to a first aspect includes a guidance calculation unit (relative position acquisition unit) 34 that acquires, with a position of an artificial satellite 200 as a reference point, a relative position between a vertical take-off and landing aircraft 1 and a landing target point 2 by comparing carrier phase data transmitted from the artificial satellite 200 to the vertical take-off and landing aircraft 1 and carrier phase data transmitted from the artificial satellite 200 to the landing target point 2; and a flight control unit (control unit) 36 that controls the vertical take-off and landing aircraft 11 such that the relative position is zero.

With the automatic landing system for a vertical take-off and landing aircraft according to the first aspect, the guidance calculation unit 34 compares each carrier phase data from the artificial satellite 200 to the vertical take-off and landing aircraft 1 and the landing target point 2 to acquire the relative position between the vertical take-off and landing aircraft 1 and the landing target point 2. Therefore, the processing of calculating a plurality of relative positions is not required, and the system can be simplified.

An automatic landing system for a vertical take-off and landing aircraft according to a second aspect is the automatic landing system for a vertical take-off and landing aircraft according to the first aspect, in which the RTK positioning processing unit (aircraft relative position measurement unit) 32 that measures a relative position between a reference point and the vertical take-off and landing aircraft 1 and the guidance calculation unit 34 are provided on a vertical take-off and landing aircraft 1 side, the RTK positioning processing unit (landing target point relative position measurement unit) 70 that measures a relative position between the reference point and the landing target point is provided on a landing target point 2 side, and the guidance calculation unit 34 acquires a relative position between the vertical take-off and landing aircraft 1 and the landing target point 2 based on the relative position of the vertical take-off and landing aircraft 1 and the relative position of the landing target point 2. Accordingly, the relative position is calculated on the vertical take-off and landing aircraft 1 side, and the flight control of the vertical take-off and landing aircraft 1 is performed, so that the control can be simplified.

An automatic landing system for a vertical take-off and landing aircraft according to a third aspect is the automatic landing system for a vertical take-off and landing aircraft according to the second aspect, in which the RTK positioning processing unit 32 selects the artificial satellite 200 capable of measuring relative positioning during a period from a current position of the vertical take-off and landing aircraft 1 until the vertical take-off and landing aircraft 1 lands on the landing target point 2. Accordingly, the RTK positioning processing unit 32 selects the artificial satellite 200 that does not become the blind spot 210 with respect to the ship 5, and the relative position can be appropriately acquired while the vertical take-off and landing aircraft 1 lands from the current position to the landing target point 2.

An automatic landing system for a vertical take-off and landing aircraft according to a fourth aspect is the automatic landing system for a vertical take-off and landing aircraft according to the second aspect or the third aspect, in which the RTK positioning processing unit 32 measures relative positioning of the vertical take-off and landing aircraft 1 when the RTK positioning is in a FIX state. Accordingly, the RTK positioning processing unit 32 can appropriately acquire the relative position while the vertical take-off and landing aircraft 1 lands from the current position to the landing target point 2.

An automatic landing system for a vertical take-off and landing aircraft according to a fifth aspect is the automatic landing system for a vertical take-off and landing aircraft according to any one of the second aspect to the fourth aspect, in which the RTK positioning processing unit 32 estimates the relative positioning of the vertical take-off and landing aircraft 1 when RTK positioning is in a FLOAT state. Accordingly, the RTK positioning processing unit 32 can appropriately acquire the relative position while the vertical take-off and landing aircraft 1 lands from the current position to the landing target point 2.

An automatic landing system for a vertical take-off and landing aircraft according to a sixth aspect is the automatic landing system for a vertical take-off and landing aircraft according to any one of the first aspect to the fifth aspect, further including a camera (imaging device) 10 mounted on the vertical take-off and landing aircraft 1, in which the guidance calculation unit 34 is capable of acquiring the relative position between the vertical take-off and landing aircraft 1 and the landing target point 2 by performing image processing on an image obtained by imaging a marker 7 provided at the landing target point 21 with the camera 10, and the flight control unit 36 controls the vertical take-off and landing aircraft 1 such that the relative position acquired through the image processing is zero when RTK positioning by the RTK positioning processing unit 32 is not in a FIX state. Accordingly, even in a case where the RTK positioning processing unit 32 cannot acquire high-accuracy relative positioning from the artificial satellite 200, the vertical take-off and landing aircraft 1 can be controlled such that the relative position acquired based on the captured image of the camera 10 is zero.

A vertical take-off and landing aircraft according to a seventh aspect includes the automatic landing system 100 for a vertical take-off and landing aircraft 1 according to any one of the first aspect to the sixth aspect. Accordingly, since the RTK positioning processing units 32 and 70 acquire the relative positioning of the vertical take-off and landing aircraft 1 and the landing target point 2, and the guidance calculation unit 34 acquires the relative position between the vertical take-off and landing aircraft 1 and the landing target point 2 based on each relative positioning, the reliability of the control of the vertical take-off and landing aircraft 11 can be improved.

A landing control method for a vertical take-off and landing aircraft according to an eighth aspect includes a step of acquiring, with a position of an artificial satellite 200 as a reference point, a relative position between a vertical take-off and landing aircraft 1 and a landing target point 2 by comparing carrier phase data transmitted from the artificial satellite 200 to the vertical take-off and landing aircraft 1 and carrier phase data transmitted from the artificial satellite 200 to the landing target point 2; and a step of controlling the vertical take-off and landing aircraft 1 such that the relative position is zero. Accordingly, since the relative position between the vertical take-off and landing aircraft 1 and the landing target point 2 is acquired by comparing each carrier phase data from the artificial satellite 200 to the vertical take-off and landing aircraft 1 and the landing target point 2, the calculation processing of a plurality of relative positions is not required, and the system can be simplified.

In the above-described embodiment, the automatic landing system for a vertical take-off and landing aircraft performs the processing after the approach mode of the vertical take-off and landing aircraft 1 based on the data from the RTK-GPS, but the present disclosure is not limited to this configuration. For example, the processing up to the approach mode may also be performed based on the data from the RTK-GPS. In addition, the processing up to the approach mode may be processed based on the data from the GPS. In this case, the processing up to the approach mode is processed using the data from the GPS, and the processing after the approach mode is processed based on the data from the RTK-GPS. The switching processing between the data from the GPS and the data from the RTK-GPS is automatically executed, for example, when the RTK positioning is in the FIX state and the vertical take-off and landing aircraft 1 or 1A approaches the landing target point 2 within a designated range as the vertical take-off and landing aircraft 1 or 1A approaches the landing target point 2 of the ship 5.

### Reference Signs List

1, 1A: vertical take-off and landing aircraft
2: landing target point
5: ship
7: marker
10: camera (imaging device)
20: navigation system
25: altitude sensor
30, 30A: control unit
32: RTK positioning processing unit (aircraft relative position measurement unit)
34: guidance calculation unit
36: flight control unit
38: image processing unit
40: data transmission device
60: navigation system
70: RTK positioning processing unit (landing target point relative position measurement unit)
80: data transmission device
90: operation display unit
100, 100A: automatic landing system

## Claims

1. An automatic landing system for a vertical take-off and landing aircraft, the automatic landing system comprising:
a relative position acquisition unit that acquires, with a position of an artificial satellite as a reference point, a relative position between a vertical take-off and landing aircraft and a landing target point by comparing carrier phase data transmitted from the artificial satellite to the vertical take-off and landing aircraft and carrier phase data transmitted from the artificial satellite to the landing target point; and
a control unit that controls the vertical take-off and landing aircraft such that the relative position is zero.

2. The automatic landing system for a vertical take-off and landing aircraft according to claim 1,
wherein an aircraft relative position measurement unit that measures a relative position between the reference point and the vertical take-off and landing aircraft and the relative position acquisition unit are provided on a vertical take-off and landing aircraft side, a landing target point relative position measurement unit that measures a relative position between the reference point and the landing target point is provided on a landing target point side, and the relative position acquisition unit acquires the relative position between the vertical take-off and landing aircraft and the landing target point based on the relative position of the vertical take-off and landing aircraft and the relative position of the landing target point transmitted from the landing target point relative position measurement unit.

3. The automatic landing system for a vertical take-off and landing aircraft according to claim 2,
wherein the aircraft relative position measurement unit selects an artificial satellite capable of measuring the relative position during a period from a current position of the vertical take-off and landing aircraft until the vertical take-off and landing aircraft lands on the landing target point.

4. The automatic landing system for a vertical take-off and landing aircraft according to claim 2,
wherein the aircraft relative position measurement unit measures the relative position of the vertical take-off and landing aircraft when RTK positioning is in a FIX state.

5. The automatic landing system for a vertical take-off and landing aircraft according to claim 2,
wherein the aircraft relative position measurement unit estimates the relative position of the vertical take-off and landing aircraft when RTK positioning is in a FLOAT state.

6. The automatic landing system for a vertical take-off and landing aircraft according to any one of claims 2 to 5, further comprising:
an imaging device mounted on the vertical take-off and landing aircraft,
wherein the relative position acquisition unit is capable of acquiring the relative position between the vertical take-off and landing aircraft and the landing target point by performing image processing on an image obtained by capturing a marker provided at the landing target point with the imaging device, and the control unit controls the vertical take-off and landing aircraft such that the relative position acquired through the image processing is zero when RTK positioning by the aircraft relative position measurement unit is not in a FIX state.

7. A vertical take-off and landing aircraft comprising:
the automatic landing system for a vertical take-off and landing aircraft according to claim 1.

8. A landing control method for a vertical take-off and landing aircraft, the method comprising:
a step of acquiring, with a position of an artificial satellite as a reference point, a relative position between a vertical take-off and landing aircraft and a landing target point by comparing carrier phase data transmitted from the artificial satellite to the vertical take-off and landing aircraft and carrier phase data transmitted from the artificial satellite to the landing target point; and
a step of controlling the vertical take-off and landing aircraft such that the relative position is zero.
